# EUROPÄISCHE PATENTSCHRIFT

(11) **EP 3 090 812 B1**
(45) Veröffentlichungstag und Bekanntmachung des Hinweises auf die Patenterteilung: **27.11.2019**
(21) Anmeldenummer: 16170730.2
(22) Anmeldetag: 21.06.2011
(51) Int. Cl.: B05D 7/06, B32B 7/14, B32B 21/00, B32B 21/02, B32B 21/06, E04F 15/10, B05D 1/40, B05D 7/08

(54) **OVERLAYFOLIE**
OVERLAY FILM
FILM DE SUPERPOSITION

(43) Veröffentlichungstag der Anmeldung: 09.11.2016
(62) Teilanmeldung aus: 11170803.8
(73) Patentinhaber: Flooring Technologies Ltd., Kalkara SCM1001 (MT)
(72) Erfinder: BRAUN, Roger, 6130 Willisau (CH)
(74) Vertreter: Kalkoff & Partner

(56) Entgegenhaltungen:
- EP-A2- 1 681 103
- WO-A1-2005/116361
- US-A1- 2009 061 333
- US-A1- 2010 177 397

## Beschreibung

Die Erfindung betrifft ein Overlay gemäß Anspruch 1.

Beschichtete Holzwerkstoffplatten, die bspw. als Laminat, Paneel, Verkleidung oder auch Arbeitsplatte verwendet werden, können eine statische Aufladung bei Personen bewirken. Insbesondere bei Fußbodenelementen, wie bspw. Laminatböden, ist es bekannt, dass eine das Laminat begehende Person eine statische Aufladung erfahren kann. Diese statische Aufladung gibt eine Person beim Berühren eines elektrisch leitenden Bauteils wie bspw. einer Türklinke oder eines Heizkörpers wieder ab. Dabei kann sie einen leichten, aber unangenehmen elektrischen Schlag erhalten. Solche elektrischen Schläge sind ab einer Aufladung von ca. 3.000 V deutlich spürbar.

Um die statische Aufladung von Personen zu verhindern, sind sogenannte "antistatische Bodenbeläge" bekannt. Die deutsche Patentanmeldung DE 103 01 293 A1 schlägt bspw. vor, Stege aus elektrisch leitendem Draht oder ein Drahtgewebe in die Oberflächenbeschichtung einer Holzwerkstoffplatte zu integrieren.

Die europäische Patentanmeldung EP 1 681 103 A2 geht ebenfalls auf das Problem der statischen Aufladung von Personen ein und beschreibt einen antistatischen Bodenbelag mit einer ableitfähigen Oberfläche, bei der eine oberhalb des Dekors angeordnete, transparente Schicht mit ableitfähigen Partikeln aufgetragen wird. Problematisch hierbei ist das Erzeugen einer vollständig transparenten Schicht, um ein Dekor, wie bspw. eine Holzmaserung, auf der Plattenoberseite nicht zu verdecken.

Die Druckschrift DE 693 163 46 T2 zeigt einen HPL und einen LPL-Schichtstoff zum Beschichten von Holzwerkstoffplatten, der mindestens eine Papierfolie enthält, die mit antistatischen Partikeln versetzt bzw. beschichtet ist. Als leitende Partikel werden Pigmente die bspw. aus Glimmerpartikeln bestehen, die mit einer Schicht mit Antimon dotiertem Zinnoxid überzogen sind offenbart.

Die Druckschrift DE 203 18 290 U1 offenbart ein Overlay zum Beschichten von Paneelen mit ebenfalls antistatischen Eigenschaften. Zur Herstellung der antistatischen Eigenschaften werden quaternäre Ammoniumverbindungen in die Harzmischung mit eingebracht. Das Overlay wird mit dieser Harzmischung getränkt oder vollflächig beschichtet.

Weiter offenbart die Druckschrift WO 2005 / 116361 ein Overlay für eine Holzwerkstoffplatte bzw. einen plattenförmigen Holzwerkstoff, bei dem eine Schicht eines mehrschichtigen Kunstharzaufbaus elektrisch leitende, transparente Partikel enthält. Die elektrisch leitenden Partikel können in eine Lackschicht oder eine Kunstharzschicht des Oberflächenaufbaus integriert sein. Auch wird vorgeschlagen, ein leitfähiges Gewebe oder ein Gitter aus einem leitfähigen Stoff in die Oberflächenbeschichtung der Holzwerkstoffplatte zu integrieren.

Sowohl die eingebrachten Metalldrähte in die Oberflächenbeschichtung, als auch die weiteren Oberflächenschichten mit elektrischer Ableitfähigkeit erzeugen eine antistatisch wirksame Beschichtung. Alle Lösungen greifen jedoch massiv in den normalen Aufbau von Oberflächenbeschichtungen für Holzwerkstoffe ein und stören diesen nachhaltig. Dies kann sich bspw. dahin gehend äußern, dass sich die Anpassung der Prozessparameter an die jeweils antistatisch wirksame Schicht als äußerst schwierig darstellt. Auch können die antistatisch wirksamen Schichten zu deutlich erhöhten Produktionskosten führen. Hinzu kommt, dass sich bei allen Lösungen die ableitfähige Schicht in ihren Eigenschaften, wie bspw. der Haftfähigkeit, deutlich von den übrigen Schichten der Oberflächenbeschichtung unterscheidet, so dass Delaminierungseffekte auftreten können.

Der Erfindung liegt die Aufgabe zugrunde, ein Overlay bereit zustellen, bei dem die statische Aufladung einer Person und die Delaminierung des Overlays verhindert wird.

Die Aufgabe wird gelöst mit einem Overlay gemäß Anspruch 1. Vorteilhafte Weiterbildungen der Erfindung sind in den abhängigen Ansprüchen angegeben.

Die eine Lage (im Weiteren "antistatische Lage" genannt) ist erfindungswesentlicher Bestandteil einer mehrlagigen Oberflächenbeschichtung (im Weiteren auch "Beschichtungssystem") wie bspw. ein mehrteiliges Lacksystem. Dabei kann das Aufbringen dieser antistatischen Lage besonders vorteilhaft in den Ablauf des normalen Beschichtungsprozesses des Overlays integriert werden. Auch ist es möglich, sie in einem eigenständigen Prozessschritt vor oder nach den weiteren Schichten der Oberflächenbeschichtung aufzutragen.

Beim Auftragen der antistatischen Lage ist es möglich, diese einschichtig oder auch mehrschichtig aufzutragen. Es können bspw. mehrere dünne Schichten übereinander aufgetragen werden, die nach dem Trocknen die antistatische Lage bilden. Hierbei ist es möglich, jede einzelne Schicht nach dem Auftragen und vor dem Auftrag der nächsten Schicht zu trockenen, anzugelieren oder auch alle Schichten im Nass-in-Nass-Verfahren aufzutragen. Gleiches gilt für die weiteren Lagen des mehrlagigen Beschichtungssystems.

Bestandteil des mehrlagigen Beschichtungssystems können auch mehrere Lagen der antistatischen Lage sein. Dabei müssen diese Lagen nicht zwangsläufig direkt aneinandergrenzen, sondern es können auch Schichten aus anderen Werkstoffen (wie bspw. Lackschichten) zwischen den antistatischen Lagen angeordnet sein.

Die Position der antistatischen Lage in einem Beschichtungssystem ist beliebig. Daher ist es nicht notwendig, dass die antistatische Lage als äußerste Lage der Oberflächenbeschichtung aufgetragen ist. Sie kann bspw. direkt auf die Holzwerkstoffplatte, auf einen Haftgrund und/oder auch unter-/oberhalb einer Grundierung, eines Dekors oder weiterer einzelner Lagen aufgetragen sein. Sie wird erfindungsgemäß flüssig aufgetragen und ist entweder selbsttrocknend oder wird durch Einwirken von Wärme oder Strahlung getrocknet oder ausgehärtet.

Eine Holzwerkstoffplatte weist zwei Hauptoberflächen auf. Dies sind zum einen die Vorderseite und zum anderen die Rückseite. Als Vorderseite wird meistens die Sichtseite d. h. die Nutzseite bezeichnet. Die Rückseite ist die der Vorderseite gegenüberliegende Seite. Sie ist im montierten Zustand einer Raumbegrenzungsfläche wie bspw. einem Fußboden, einer Wand oder Decke zugewandt. Bei Verwendung der Holzwerkstoffplatte als bspw. Raumteiler kann sowohl die Vorder- als auch die Rückseite eine Sichtseite sein.

Oberflächenbeschichtungen von Holzwerkstoffplatten können -ebenso wie die antistatische Lage - bspw. flüssig aufgetragen werden. Hierfür werden insbesondere Lacke, Kunststoffe, Kunstharze, Kleber, flüssige Overlays, allgemein Dispersionen oder Suspensionen, Leim oder auch gelförmige Mittel verwendet. Die antistatische Lage kann aus einem oder mehreren dieser oben genannten Flüssigkeiten bestehen. Diese können zusätzlich teilweise eingefärbt, d. h. farbig oder mehrfarbig ausgebildet oder auch farblos, das bedeutet transparent sein.

Grundsätzlich sind auch feste Oberflächenbeschichtungen bekannt. Hierzu gehören insbesondere Overlays und Dekorpapiere oder im Allgemeinen bahnenförmige Werkstoffe, die bspw. mit Kunstharz getränkt sind und auf eine Holzwerkstoffplatte aufgetragen werden. Die antistatische Lage kann auch Bestandteil eines solchen festen Beschichtungssystems sein, wobei sie dann erfindungsgemäß flüssig auf oder unter das feste Beschichtungssystem aufgetragen ist.

Auch ist es denkbar, das die antistatische Lage Teil eines kombinierten Beschichtungssystems ist, wobei dieses teilweise flüssig, teilweise fest sein kann und in dem die antistatische Lage als Bestandteil integriert ist. Die antistatische Lage der erfindungsgemäßen Holzwerkstoffplatte kann in allen üblichen Oberflächenbeschichtungssystemen verwendet werden.

Die antistatische Lage wird unabhängig von der Art des weiteren Beschichtungssystems grundsätzlich als Flüssigkeit aufgetragen. Unter einer Flüssigkeit ist im Rahmen dieser Anmeldung bspw. jede der oben aufgeführten Substanzen zu verstehen. Diese sind mit üblichen Auftragsverfahren oder auch Druckverfahren für flüssige Substanzen auf die Holzwerkstoffplatte aufzutragen. Hierzu gehören insbesondere Verfahren zum Spritzen, Streichen, Walzen oder auch Digitaldruckverfahren wie bspw. das Drucken mit Tintenstrahldruckern.

Die für die eine Lage zu verwendenden elektrisch leitenden Partikel sind weitestgehend bekannt. Hierbei offenbart insbesondere die aus dem Stand der Technik bekannte EP 1 681 103 A1 eine Vielzahl von unterschiedlich verwendbaren Partikeln.

Die antistatische Lage wird erfindungsgemäß abschnittsweise aufgetragen. Darunter ist zu verstehen, dass die antistatische Lage, wenn sie bspw. auf die Oberseite, d. h. die Vorderseite der Holzwerkstoffplatte aufgetragen wird, diese Seite nicht vollständig bedeckt. Es sind also zwangsläufig Bereiche auf der Vorderseite der Holzwerkstoffplatte, die von der antistatischen Lage bedeckt sind und Bereiche, die nicht bedeckt sind. Die antistatische Lage kann in unterschiedlichsten geometrischen Formen oder auch Anordnungen aufgetragen sein. Hier sind bspw. punktförmiges Auftragen, das Auftragen von mehreren Flecken oder das Auftragen von bestimmten Mustern denkbar.

Insbesondere kann die antistatische Lage streifenförmig oder in Form eines Gitters ausgeführt werden. Die Streifen können dabei als Gerade und/oder als nicht linear verlaufende Streifen aufgetragen werden. Auch können bspw. einzelne Streifen in Wellen- oder Zackenform entlang einer Geraden aufgetragen sein.

Die Streifen können bezogen auf das Overlay in Längsrichtung und/oder auch in Querrichtung verlaufen. Auch Streifen, die bogenförmig, diagonal oder in unterschiedliche Richtungen verlaufen, sind denkbar. Das geometrische Muster, das die Streifen bildet, ist beliebig.

Unter einem Gitter wird im Sinne dieser Erfindung eine gleichmäßige Verteilung der Streifen verstanden. Dabei können bspw. die Streifenbreite und/oder auch die Streifenabstände gleichmäßig sein. Ein Gitter kann bspw. aus Streifen bestehen, die parallel zueinander ausgerichtet sind. Auch sind Gitter denkbar, in den eine erste Gruppe paralleler Streifen mit einem Winkel von bspw. 90° zu einer zweiten Gruppe paralleler Streifen ausgerichtet ist.

Ein besonderer Vorteil des erfindungsgemäßen Overlays mit der antistatischen Lage ist, dass durch den abschnittsweisen Auftrag der antistatischen Lage zwischen den einzelnen Bereichen in denen die antistatische Lage aufgetragen ist, Bereiche (Zwischenräume) entstehen, die nicht mit der antistatischen Lage bedeckt sind. Dadurch ist die gesamt aufzutragende Menge der antistatischen Lage deutlich geringer, als wenn die antistatische Lage bspw. die Vorderseite vollständig bedeckt.

Der vorteilhafte abschnittsweise Auftrag der antistatischen Lage gewährleistet, dass sich in den freien Abschnitten, die nicht von der antistatischen Lage abgedeckt sind, ober- und unterhalb der antistatischen Lage angeordnete Lagen- und damit deren Oberflächen- direkt miteinander verbinden können. Über diese direkte Verbindung ist ein besonders fester Verbund der ober- und unterhalb der antistatischen Lage befindlichen Lagen/Oberflächen möglich. Dieser direkte Verbund der einzelnen Oberflächenlagen entspricht der bekannten Verbindung in Beschichtungssystemen ohne antistatische Lage.

Der abschnittsweise Verbund der unter- und oberhalb der antistatischen Lage angeordneten Lagen/Oberflächen verhindert bspw. eine Delaminierung einzelner Schichten eines mehrschichtigen Oberflächensystems aufgrund von zu geringen Hafteigenschaften der antistatischen Lage.

Hinzu kommt, dass Prozessparameter wie bspw. Presstemperaturen, Auftragstemperaturen und Trocknungsgeschwindigkeiten für weitere Lagen der Oberflächenbeschichtung durch die nur abschnittsweise aufgetragene antistatische Lage nur geringfügig angepasst werden müssen.

Gemäß einer besonders bevorzugten Weiterbildung der Erfindung erfolgt, durch einen ausreichend hohen Einsatz elektrisch leitender Partikel und ausreichend viele und/oder breite Streifen der die leitfähigen Partikel enthaltenden Flüssigkeit beim Begehen der Platte eine Personenaufladung von weniger als 2.000 V. Diese Personenaufladung wird üblicherweise über ein Verfahren, das in der Norm DIN 1815 beschrieben wird, bestimmt. Weiter wird eine Ausführungsform besonders bevorzugt, bei der die Norm EN 14041 erfüllt ist und die Holzwerkstoffplatte gemäß dieser Norm als "antistatischer Bodenbelag" bezeichnet werden kann.

Die antistatische Lage kann - wie bereits beschrieben - unterschiedlich aufgetragen und ausgerichtet sein. Insbesondere ist sie jedoch in Form von regelmäßig oder unregelmäßig verteilten Streifen aufgetragen. Diese Streifen weisen besonders bevorzugt eine Breite zwischen 40 mm - 0,05 mm, bevorzugt zwischen 20mm und 0,5 mm, besonders bevorzugt zwischen 15 mm und 0,75 mm, vorzugsweise zwischen 12,5 mm und 1,0 mm vorteilhafter Weise zwischen 10 mm und 1 mm und besonders vorteilhaft zwischen 5 mm und 2 mm auf.

Die Breite der Streifen kann sich bspw. nach der Anzahl der Streifen richten. Je breiter der einzelne Streifen ist, desto weniger Streifen sind auf der Oberfläche der Holzwerkstoffplatte notwendig. Die Streifen auf einer Oberfläche können auch unterschiedlich breit ausgelegt sein. So ist es bspw. möglich, besonders breite Streifen und besonders schmale Streifen gemeinsam auf eine Oberfläche der Holzwerkstoffplatte aufzutragen. Auch regelmäßige Muster sind hier denkbar. Es können bspw. besonders breite Streifen in Längsrichtung der Platte und besonders schmale Streifen in Querrichtung der Platte aufgetragen werden. Durch die Gestaltung der Streifen kann ein Optimum von Materialeinsatz und Leitfähigkeit eingestellt werden.

Besonders bevorzugt sind die aufgetragenen Streifen zumindest teilweise miteinander verbunden. Dies kann bspw. durch in Längs- als auch in Querrichtung aufgetragene Streifen erfolgen. Auch unregelmäßige oder bogenförmige, z.B. kreuzend angeordnete Streifen können mehrere Streifen miteinander verbinden. Die Streifen können sich überlappen oder auch nur aneinanderstoßen. Solche Verbindungen -unabhängig davon, ob überlappend oder aneinanderstoßend- werden im Rahmen dieser Anmeldung als Knotenpunkte bezeichnet. Es müssen nicht alle aufgetragenen Streifen untereinander verbunden sein, eine Vielzahl von Verbindungen ist jedoch von Vorteil, da die Ableitfähigkeit der Holzwerkstoffplatte verbessert wird.

Aus diesem Grund sind gemäß einer besonders bevorzugten Weiterbildung der Erfindung die Streifen in Form eines regelmäßigen oder unregelmäßigen Netzes aufgetragen. In einem Netz bilden die einzelnen, aneinanderstoßenden Streifen eine Vielzahl von Knotenpunkten die alle Streifen untereinander verbinden. Diese können, wie bei den nicht netzförmig aufgetragenen Streifen bereits ausgeführt, sich überlappen oder auch nur aneinanderstoßen.

Die Form des Netzes ist unterschiedlich zu gestalten. Es kann bspw. rhombische, quadratische, rechteckige, sechseckige oder auch allgemein polygonale Öffnungen (bei Netzen auch Maschen genannt) aufweisen. Auch sind kreis-/bogenförmige Öffnungen möglich. Es kann aber auch ein gänzlich unregelmäßiges Netz aufgetragen werden, in dem kein spezifisches Muster erkennbar ist. Besonders bevorzugt wird ein Netz mit einer hohen Anzahl an Knotenpunkten aufgetragen, da dadurch eine besonders gute Ableitfähigkeit elektrischer Ladungen gewährleistet ist. Die Knotenpunkte können - anders als beim Stand der Technik - so ausgebildet werden, dass sie die gleiche Stärke (Auftragsdicke) aufweisen, wie die übrigen Bereiche der antistatischen Lage.

Besonders bevorzugt sind die Streifen oder auch das Gitter zumindest teilweise durchgängig auf bspw. eine Seite der Oberfläche aufgetragen. Durchgängig bedeutet, dass die Streifen ohne Unterbrechung von einer ersten Plattenkante zu einer zweiten Plattenkante aufgetragen sind. Die jeweiligen Plattenkanten können sich gegenüber liegen oder auch aneinandergrenzen. Hierdurch ist eine besonders gute Ladungsverteilung an der Oberfläche gegeben.

Bei Verwendung des Overlays für eine Holzwerkstoffplatte als Fußbodenelement sollte der Abstand der Streifen zueinander oder auch bspw. die Maschengröße bei Auftrag eines Netzes nicht größer sein als die Länge eines menschlichen Fußes. Dadurch wird gewährleistet, dass eine das Fußbodenelement begehende Person immer mindestens zwei Streifen gleichzeitig "berührt".

Besonders bevorzugten beträgt der Abstand zwischen den Einzelnen durch die antistatische Lage bedeckten Abschnitten zwischen 1 mm und 60 mm, bevorzugt zwischen 5mm und 30mm, besonders bevorzugt zwischen 7,5 mm und 20 mm, vorzugsweise zwischen 10mm und 15mm, vorteilhaft 12,5 +/- 2mm beträgt.

Um sowohl eine ausreichende elektrische Ableitfähigkeit der antistatischen Lage als auch eine ausreichende Haftung der einzelnen Lagen untereinander zu erreichen, ist die antistatische Lage nur abschnittsweise auf die bspw. Vorderseite (Sichtseite) der Holzwerkstoffplatte aufgetragen. Entscheidend für das optimale Ergebnis kann also das Verhältnis zwischen Gesamtoberfläche der bspw. Vorderseite und der durch die antistatische Lage abgedeckten Oberfläche der Vorderseite sein. Hierbei bedeutet bspw. eine 100%-ige Abdeckung der Vorderseite, dass die antistatische Lage vollständig auf die Vorderseite aufgetragen ist.

Gemäß einer besonders bevorzugten Weiterbildung der Erfindung ist die eine Lage auf eine Sichtseite der Holzwerkstoffplatte aufgetragen und bedeckt zwischen 50% und 1%, besonders bevorzugt zwischen 25% und 1%, vorteilhaft zwischen 10% und 1%, besonders vorteilhaft zwischen 5% und 1% und vorzugsweise weniger als 1 % der Sichtseite.

Neben der üblichen Auftragsweise der antistatischen Lage als regelmäßig oder unregelmäßig verteilte Streifen ist es nach einer besonderen Weiterbildung der Erfindung möglich, dass die antistatische Lage an ein Muster eines Dekors angepasst ist. Hier ist es bspw. denkbar, die antistatische Lage besonders dunkel einzufärben und mit dieser dunkel eingefärbten Lage bspw. dunkle Jahrringe eines Holzdekors oder auch Poren eines Holzdekors nachzubilden. Auch denkbar wäre es, die antistatische Lage besonders dick aufzutragen, so dass die antistatische Lage eine besondere, an das Dekor angepasste Haptik erzeugt.

Die antistatische Lage kann bei transparenter Ausführung bspw. oberhalb eines Dekors angeordnet sein. Bevorzugt ist die antistatische Lage, jedoch unterhalb einer ein Dekor bildenden Lage, aufgetragen. Der besondere Vorteil hierbei ist, dass bspw. auf die Farbe der antistatischen Lage keine Rücksicht genommen werden muss. Diese kann besonders dunkel, mehrfarbig, einfarbig oder transparent ausgebildet sein. Aufgrund dessen, dass die antistatische Lage von einer dekorbildenden Schicht überdeckt wird, ist sie nicht sichtbar. Damit besteht die vorteilhafte Möglichkeit, die antistatische Lage ausschließlich auf ihre ableitfähigen Eigenschaften einzustellen, ohne dass weitere besondere Eigenschaften, wie bspw. Transparenz beachtet werden müssen.

Nach einer besonders bevorzugten Weiterbildung besteht die antistatische Lage aus einem im ausgehärteten Zustand mit elektrisch leitenden Partikeln gefüllten PVAC-Kleber oder PUR-Kleber. PVAC-Kleber sind mit allen üblichen Auftrags- und Druckverfahren auf eine Oberfläche aufzutragen und besonders gut in übliche Oberflächenbeschichtungen zu integrieren. Hinzu kommt, dass PVAC-Kleber kostengünstig sind.

Besonders bevorzugt besteht die antistatische Lage im flüssigen Zustand aus einem im ausgehärteten Zustand mit Kohlenstoff-Nanotubes gefüllten Kleber. Dieser kann bspw. als Suspension die Kohlenstoff-Nanotubes enthält aufgetragen werden. Die Kohlenstoff-Nanotubes weisen eine besonders gute Ableitfähigkeit auf, so dass es möglich ist, mit nur geringen Mengen an Kohlenstoff-Nanotubes eine besonders gute Ladungsverteilung zu erreichen. Dadurch können besonders einfach antistatischen Eigenschaften der Holzwerkstoffplatte hergestellt werden.

Nach einer vorteilhaften Weiterbildung der Erfindung sind die elektrisch leitfähigen Partikel, bspw. Partikel aus Ruß, Graphit oder Metall. Diese Partikel sind besonders einfach in übliche Flüssigkeiten zur Oberflächenbeschichtung zu integrieren und kostengünstig. Unabhängig von der Art der Partikel ist auch die Form der Partikel beliebig. So kann es sich bspw. um besonders flache, runde oder längliche, und/oder auch um Flakes, Fasern, Tubes, Hohlkörper oder Gemische dieser unterschiedlichen Partikel handeln.

Gemäß einer bevorzugten Weiterbildung der Erfindung enthält die eine Lage im flüssigen Zustand als elektrisch leitfähige Partikel hochkonzentrierte Salze. Salze können hervorragende elektrische Leiter sein, sind besonders einfach in der Flüssigkeit zu verteilen und mit der Flüssigkeit aufzutragen. Sie eignen sich in besonders vorteilhafterweise zum direkten Auftrag auf die Holzwerkstoffplatte oder unterhalb einer Dekorschicht.

Bevorzugt werden quaternäre Ammoniumsalze, Alkalisalze, Perflouralkylsulfonat, oder Perflouralkylsulfonylamide verwendet. Besonders bevorzugt werden mit Antimon dotiertem Zinnoxid beschichtete Glimmer-Partikel verwendet, wie bspw. leitfähige Minatec®-Pigmente. Es können jedoch auch alle weiteren Salze/Pigmente verwendet werden, die eine elektrische Leitfähigkeit der einen Lage herstellen.

Die aufzutragende Flüssigkeitsmenge, aus der die antistatische Lage gebildet wird, ist von unterschiedlichen Faktoren abhängig. Dies kann bspw. die Anzahl der elektrisch leitenden Partikel pro Mengeneinheit oder auch pro Flächeneinheit sein. Sie kann jedoch bspw. auch durch die Breite der einzelnen Streifen bzw. durch den Abdeckungsgrad der Oberfläche durch die antistatische Lage bestimmt werden. Die Flüssigkeit besteht bevorzugt aus vernetzbaren Monomeren, ggf. mit Anteilen von Wasser oder Lösungsmittel.

Der Anteil an elektrisch leitenden Partikeln in der Flüssigkeit kann bspw. abhängig von der Art der Partikel und insbesondere von der Form der Partikel sein. Bei elektrisch leitenden Fasern ist ein erheblich geringer Anteil notwendig als bei bspw. runden leitfähigen Partikeln, da bei Fasern eine stärkere Überlappung der einzelnen Fasern und damit eine bessere Leitfähigkeit zwischen den Fasern erreicht wird. Üblich ist eine Menge von elektrisch leitfähigen Partikeln in der Flüssigkeit, die ca. 2% bis 8% des Gewichtes der Flüssigkeit mit der sie aufgetragen werden entspricht. Bei bspw. Karbonfasern sind Mengen von ca. 2% bis max. 7% notwendig. Wie bei der aufzutragenden Flüssigkeitsmenge ist auch der Anteil an elektrischen Partikeln in der Flüssigkeit von vielen Faktoren abhängig. Diese können zum einen die partikelspezifischen Eigenschaften (wie bspw. Art, Form, Größe, Leitfähigkeit, usw.) und zum anderen die auftragspezifischen Eigenschaften (Auftragsform, Vernetzung der Partikel untereinander, usw.) sein.

Zusätzlich zu der Beschichtung der bspw. Vorderseite und/oder Rückseite können auch die Seitenflächen -die ebenfalls zur Oberfläche der Holzwerkstoffplatte gehören- mit beschichtet werden. Insbesondere bei der Ausgestaltung der Holzwerkstoffplatte als Paneel, das heißt mit einem Verbindungsprofil zum Verbinden mehrerer Holzwerkstoffplatten ist der weiterführende Auftrag der Stege oder des Gitters auf die Seitenflächen denkbar.

Weiter wird die Aufgabe durch ein Overlay gelöst, welches zum Beschichten einer Trägerplatte aus bspw. Holzwerkstoffen geeignet ist und mindestens eine antistatische Lage aufweist, die als Flüssigkeit aufgetragen ist, die abschnittsweise aufgetragen ist und elektrisch leitende Partikel enthält. Auch Overlays weisen eine Vorder- und eine Rückseite auf. Wie bei den Holzwerkstoffplatten wird unter der Vorderseite des Overlays die Seite verstanden, die bspw. sichtbar ist oder als Nutzfläche verwendet wird. Als Rückseite ist beim Overlay die Seite zu verstehen, die zur Trägerplatte weist. Die antistatische Lage kann dabei auf der Vorderseite oder auch auf der Rückseite des Overlays aufgetragen sein.

Im Folgenden werden Details der Erfindung anhand von Ausführungsbeispielen näher erläutert. Es zeigt
- Fig.1: eine schematische Darstellung eines alternativen, nicht erfindungsgemäßen Ausführungsbeispiels mit einer direkt auf eine Holzwerkstoffplatte gitterförmig aufgetragenen antistatischen Lage;
- Fig.2: eine schematische Darstellung eines alternativen, nicht erfindungsgemäßen Ausführungsbeispiels mit einer antistatischen Lage unterhalb einer Dekorschicht;
- Fig.3: eine schematische Darstellung eines alternativen, nicht erfindungsgemäßen Ausführungsbeispiels mit einer gitterförmig aufgetragene antistatischen Lage;
- Fig.4: eine schematische Darstellung eines alternativen, nicht erfindungsgemäßen Ausführungsbeispiels mit einer netzförmigen, transparenten antistatischen Lage;
- Fig.5: eine schematische Darstellung eines alternativen, nicht erfindungsgemäßen Ausführungsbeispiels mit einer netzförmigen, transparenten antistatischen Lage
- Fig.6: eine schematische Darstellung eines Overlay mit antistatischer Lage zum Beschichten von Trägerplatten.

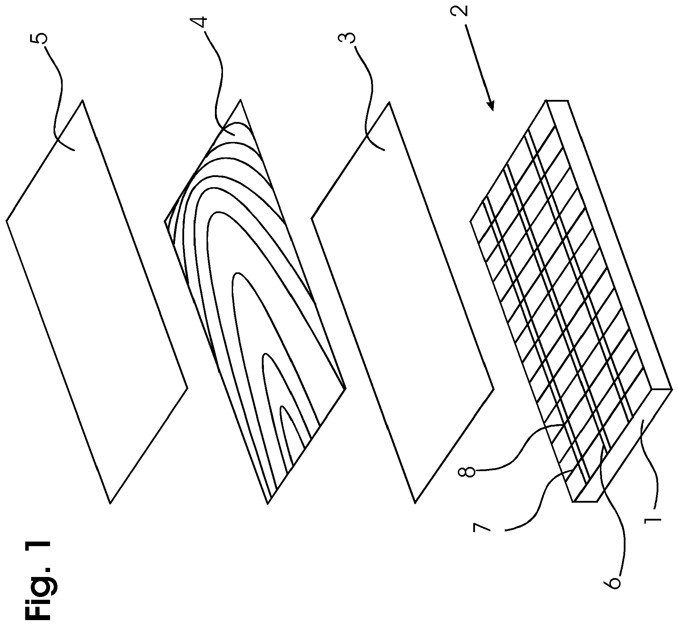

Eine in Fig. 1 dargestellte Holzwerkstoffplatte, eine HDF-Platte 1 (hochdichte Faserplatte), weist eine mehrschichtige Oberflächenbeschichtung auf, auf deren Vorderseite ausgehend von der Oberfläche der HDF-Platte 1, eine abschnittsweise aufgetragene Lage 2 mit elektrischen Partikeln (antistatische Lage), ein Schicht aus Grundierung 3, ein Dekor 4 und eine Versiegelungsschicht 5 aufgetragen ist. Die Oberflächenbeschichtung der, der Vorderseite gegenüber liegenden Rückseite und der Kanten der HDF-Platte 1 ist hiervon abweichend aufgebaut.

Die antistatische Lage 2 ist gitterförmig aufgetragen. Das Gitter besteht aus Längsstreifen 6 und Querstreifen 7. Die Längsstreifen 6 verlaufen parallel zu einer längeren Außenkante der HDF-Platte 1, die Querstreifen 7 verlaufen parallel zu einer gegenüber der Längeren Außenkante kürzeren Außenkante der HDF-Platte 1. Der Winkel zwischen Längs- und Querstreifen 6,7 beträgt 90° +/- 1°. Die Streifen 6,7 können aber bspw. auch in einem scherenförmigen Muster verlaufen. Der Winkel zwischen den Streifen 6, 7 des antistatisch wirkenden Materials kann bspw. zwischen 50° und 170° betragen, je nach Art des Materials, Anforderung an die antistatischen Eigenschaften der Oberflächenbeschichtung oder der Position der antistatischen Lage 2 in der Oberflächenbeschichtung. Die Längsstreifen 6 und Querstreifen 7 berühren sich, so dass Knotenpunkte 8 ausgebildet werden, über die eine Ladungsverteilung erfolgen kann. Die Knotenpunkte 8 weisen die gleiche Materialstärke auf wie die Streifen 6,7. Die Längsstreifen 6 sind mit ungleichmäßigem Abstand jedoch parallel zueinander aufgetragen. Sie sind immer paarweise aufgetragen, so dass jeweils zwei Streifen mit einem Abstand von jeweils 10 mm +/-1 mm zueinander und einem Abstand von 60 mm +/-1 mm zum nächsten Streifenpaar aufgetragen sind. Die Querstreifen 7 werden gleichmäßig parallel mit einem Abstand von 40 mm +/-1 mm zueinander aufgetragen. Die Breite der Streifen 6,7 beträgt durchgängig 0,5 mm +/- 0,1 mm. Die Vorderseite der Holzwerkstoffplatte ist damit zu 2,2 % durch die antistatische Lage 2 abgedeckt.

Die antistatische Lage 2 ist flüssig mit einer Walze aufgetragen und wurde mit dem Auftrag durch Passieren eines Warmluftofens getrocknet. Sie besteht aus einem Polyurethanklebstoff der mit einem Minatec®-Pigment versetzt ist. Der Mengenanteil des Minatec®-Pigment beträgt 5 Gew. % bezogen auf den Polyurethanklebstoff. Der Polyurethanklebstoff ist ein 1-Komponenten-Klebstoff. Es können jedoch auch 2-Komponenten Polyurethanklebstoffe verwendet werden. Alternativ kann bspw. auch ein PVAC-Kleber, der hochkonzentrierte elektrisch leitfähige Salze beinhaltet verwendet werden.

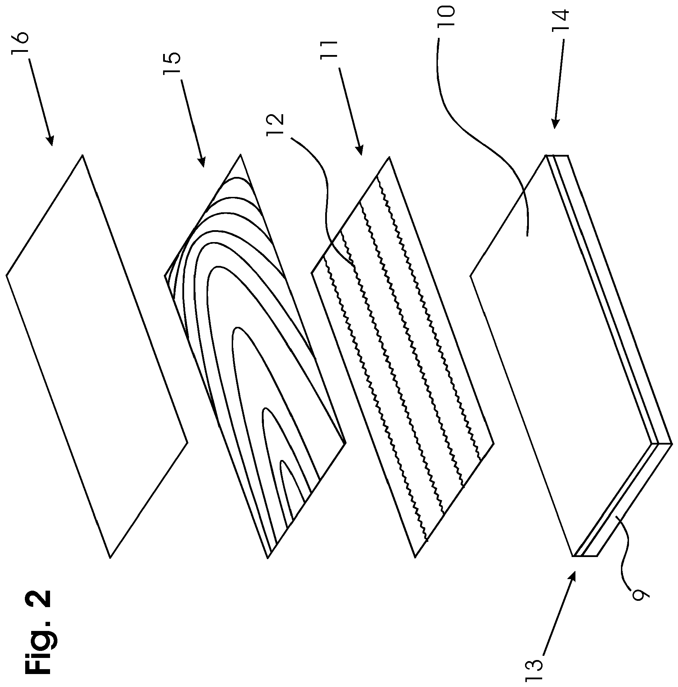

In Fig. 2 ist als Trägerplatte eine Spanplatte 9 dargestellt. Ausgehend von der Oberfläche der Spanplatte 9 ist eine Grundierungsschicht 10 auf die Spanplatte 9 aufgetragen worden. Ggf. kann vor der Grundierung 10 auch noch eine Schicht Haftgrund auf die Spanplatte 9 aufgetragen werden. Auf die Grundierung 10 und unterhalb einer Dekorlage 15 ist die antistatische Lage 11 aufgebracht. Die Streifen 12 der antistatischen Lage 11 sind als Zickzack-Linien ausgebildet, weisen eine Streifenbreite von 12,5 mm +/-1 mm auf und haben einen mittleren Abstand von 50 mm +/-1 mm zueinander. Die antistatische Lage 11 besteht aus einem mit Karbonfasern gefüllten Kunstharz, welches mit einer Dicke von 30 µm aufgetragen wurde und nach dem Auftragen durch Elektronenstrahlhärtung getrocknet wurde. Alternativ kann bspw. eine Suspension aus einem PVAC-Kleber mit Kohlenstoff-Nanotubes verwendet werden. Die Streifen 12 verlaufen ohne Unterbrechung von einer ersten Außenkante 13 zu einer der ersten Außenkante 13 gegenüberliegenden, zweiten Außenkante 14. Die antistatische Lage 11 wurde mit Walzen aufgetragen und mit Hilfe von Warmluft angeliert, jedoch nicht ausgehärtet. Oberhalb der antistatischen Lage 11 ist die Dekorlage 15 angeordnet, die aus mehreren einzelnen Schichten besteht. Die Dekorlage 15 wurde ebenso wie die antistatische Lage 11 flüssig mit Hilfe von Walzen aufgetragen. Den äußeren Abschluss der Oberflächenbeschichtung bildet eine flüssige Versiegelungsschicht 16 aus Kunstharz, ein sogenanntes flüssiges Overlay auf Melaminharzbasis, das mit Cellulosefasern versetzt ist. Abschließend wurden alle Schichten in einer Kurztaktpresse unter Einwirkung von Druck und Wärme ausgehärtet.

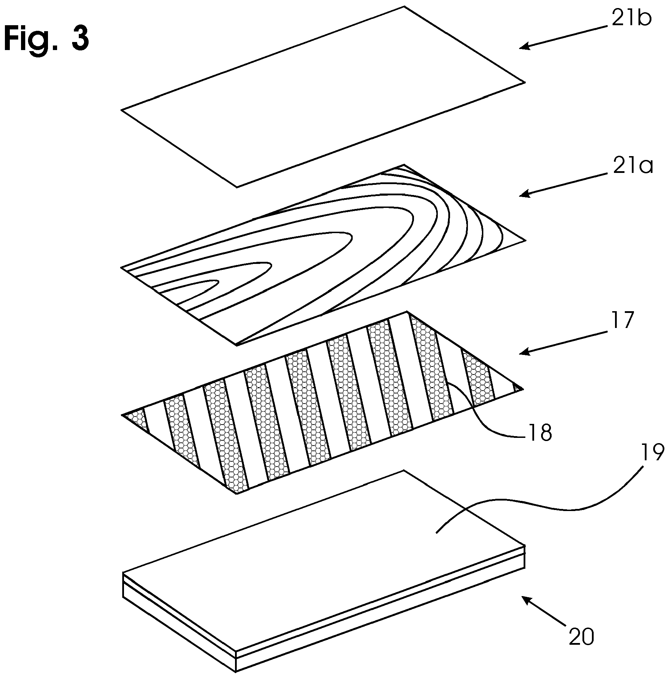

In Fig. 3 wird ein ähnlicher Schichtaufbau wie in Fig. 2 dargestellt. Als Trägerplatte 20 wird eine Furnierholzplatte 20 verwendet. Die antistatische Lage 17 ist ebenfalls als Gitter mit gleichmäßig verteilten parallel zueinander ausgerichteten Streifen 18 (mit Wabenschraffur dargestellt) auf die getrocknete und geschliffene Grundierung 19 aufgetragen. Die Streifen 18 sind jedoch in einem Winkel von ca. 30° zu einer Längskante 20 der Furnierholzplatte 20 ausgerichtet. Die Breite der Streifen 18 beträgt 40 mm +/-1 mm und der Abstand zwischen den Streifen 18 45 mm +/-1 mm. Hierdurch bedeckt die antistatische Lage 17 ca. 47% der Oberfläche der Sichtseite. Die antistatische Lage 17 besteht aus einem mit Rußpartikeln gefüllten Kunstharz, der durch Digitaldruck aufgetragen und unter Strahleneinwirkung getrocknet wurde. Oberhalb der antistatischen Lage 17 ist ein Dekorpapier 21a und ein transparentes Overlaypapier 21b angeordnet, die beide mit Melaminharz getränkt sind. Abschließend wurden alle Schichten unter Einwirkung von Druck und Wärme ausgehärtet.

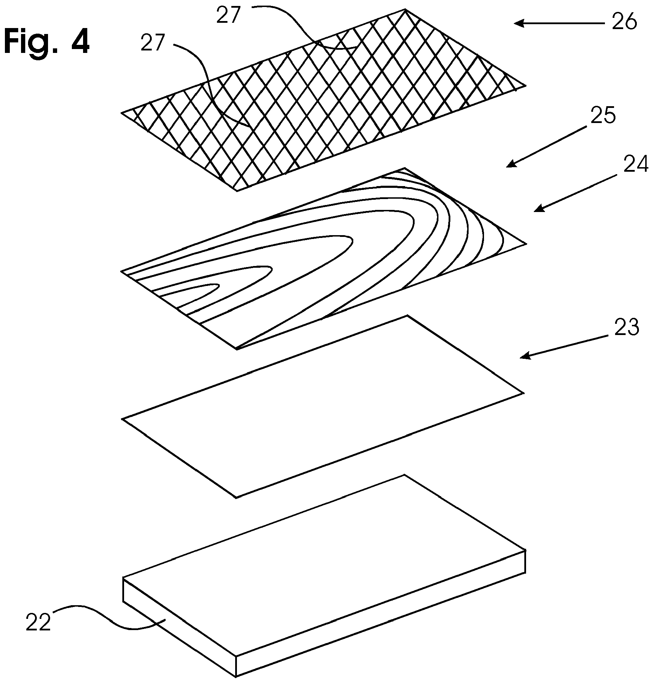

In Fig. 4 wird als Trägerplatte eine hochdichte Holzfaserplatte 22 (HDF-Platte) dargestellt. Die HDF-Platte 22 ist mit einer Grundierung 23 beschichtet. Auf die Grundierung 23 ist eine mehrschichtige Dekorlage 24 mit transparenter Versiegelungsschicht 25 aufgetragen. Abschließend ist eine transparente antistatische Lage 26 auf die Versiegelungsschicht 25 der Dekorlage 24 aufgetragen worden. Die antistatische Lage 26 besteht aus einem Kunstharz in dem mit Antimon dotiertem Zinnoxid beschichte Glimmerpartikel dispergiert wurden. Sie ist in Netzform aufgetragen und weist besonders schmale Streifen 27 auf. Die Streifenbreite beträgt 0,1 mm +/- 0,02 mm. Der Abstand der Streifen 27 zueinander beträgt 20 mm +/-1 mm. Die Streifen 27 gehen jeweils durchgängig von einer ersten Außenkante, zu einer zweiten Außenkante der Holzwerkstoffplatte.

Auf die Oberfläche der Holzwerkstoffplatte 30 ist eine Grundierung 31 aufgetragen. Die Grundierung 31 wurde vor dem Auftragen weiterer Schichten getrocknet und geschliffen. Die antistatische Lage 32 ist oberhalb der Grundierung 31 aufgetragen und als besonders feinmaschiges Netz ausgebildet, wobei die einzelnen Streifen eine Breite von 1 mm +/-0,1 mm und einen Abstand von 10 mm +/-1 mm aufweisen. Sie wurde nach dem Auftragen ebenfalls getrocknet. Durch dieses engmaschige Netz mit im Verhältnis zum Streifenabstand besonders breiten Streifen ist eine besonders gute Abschirmung elektromagnetischer Strahlung möglich. Oberhalb der antistatischen Lage 32 sind eine mehrschichtige Dekorlage 33 und eine Versiegelungsschicht 34 aus Klarlack angeordnet. Alle Schichten wurden mittels Walzen aufgebracht.

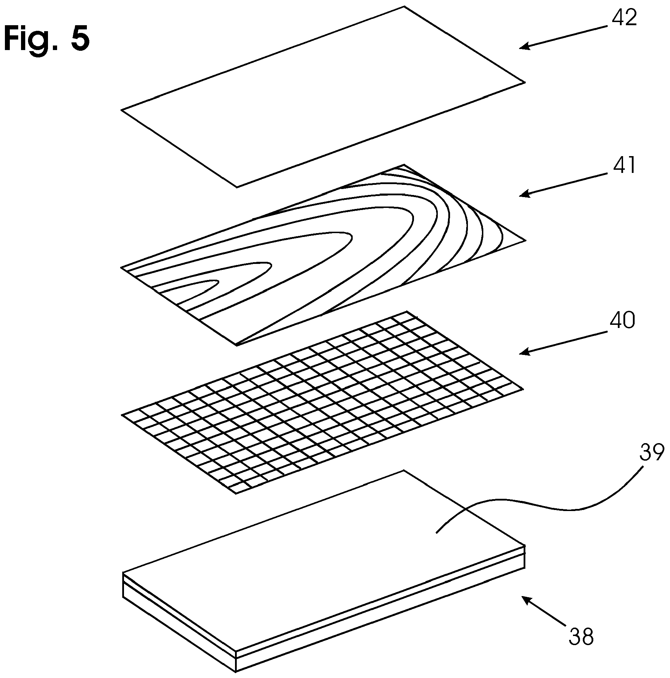

Fig. 5 zeigt eine MDF-Platte 38 auf die eine antistatische Lage 40 als gleichmäßiges Netz aufgetragen ist. Die antistatische Lage 40 besteht aus einem 1-Komponenten-Polyurethankleber, der mit 5 Gew.-% eines Minatec®-Pigmentes versetzt ist. Die Streifen der antistatischen Lage 40 wurden mit einem gleichmäßigen Mittelabstand von 50 mm +/-1 mm aufgetragen. Die flüssig aufgetragenen Streifen sind nach dem Auftrag leicht verlaufen, so dass die Streifenbreite ca. 3 mm +/- 2 mm beträgt.

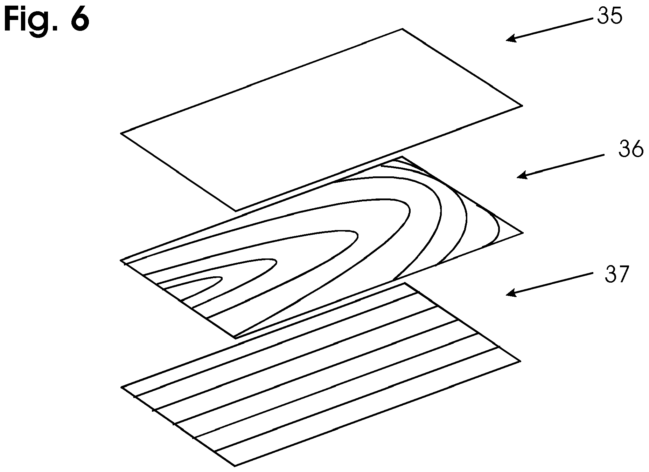

Oberhalb der antistatischen Lage 40 sind eine Dekorlage 41 und eine Versiegelungsschicht 42 in Form von mit Melamin beharzten Papieren aufgetragen. Die Personenaufladung bei einer Ausführung gemäß Figur 6 beträgt gemessen nach DIN 1815 ca. 1kV.

In Fig. 6 wird ein dreilagiges Overlay zum Verpressen auf eine Holzwerkstoffplatte dargestellt. Die äußerste Schicht des Overlays, die Versiegelungsschicht 35, wird durch ein mit einem transparenten Harz getränktes Trägerpapier hergestellt. Unterhalb der Versiegelungsschicht ist ein Dekorpapier 36, welches ebenfalls mit einem Harz getränkt wurde, angeordnet. Auf die Unterseite des Dekorpapiers 36, das heißt auf die Seite, die im verpressten Zustand zur Oberfläche der Trägerplatte zeigt, wurde nach dem Trocknen der Dekorlage eine antistatische Lage 37 flüssig aufgetragen. Die antistatische Lage 37 ist als Gitter mit Längs- und Querstreifen ausgeführt. Die Streifenbreite beträgt 0.5 mm +/- 0,1 mm, der Streifenabstand 30 mm +/-1 mm. Die antistatische Lage 37 besteht aus einem mit Graphit gefüllten Klebstoff, der mittels Walzen auf die Unterseite des Dekorpapiers 36 aufgetragen und unter Einwirkung von Warmluft getrocknet wurde.

Es können sowohl beim Overlay aus Fig. 6 als auch bei den Ausführungsbeispielen aus den Figuren 1 - 5 weitere Lagen angeordnet sein. Denkbar sind bspw. Lagen mit verschleißfesten Bestandteilen wie z. B. Korund, weitere Trägerpapierlagen beim Overlay und/oder Lagen mit geringer Härte, die unter- und/oder oberhalb des Dekors angeordnet werden und der Verbesserung der schallisolierenden Eigenschaften dienen.

Die beschrieben Auftragungsmuster, insbesondere die Streifen-, Gitterform, die Breite und/oder die Abstände der Gitter/Streifen und die Auftragungsmethoden sind beispielhaft. Auch sind kombinierte Muster möglich.

Ferner sind die Auftragungsmethoden nicht auf das jeweilige Ausführungsbeispiel beschränkt, sondern können auch für Stoffzusammensetzungen und Muster anderer Ausführungsbeispiele angewendet werden.

Insbesondere ist es auch möglich, die jeweils beschriebenen Stoffzusammensetzungen einer antistatischen Lage eines ersten Ausführungsbeispiels mit dem Auftragungsmuster eines weiteren Ausführungsbeispiels aufzutragen. Weiter sind die vorab beschriebenen Stoffkombinationen, d.h. die Kombinationen von Partikeln und/oder Klebern und/oder Kunstharzen und/oder Lacken nur beispielhaft aufgeführt, nicht als abschließend aufgezählt zu verstehen und untereinander kombinierbar.

## Patentansprüche

1. Overlay, zum Beschichten einer Trägerplatte aus Holzwerkstoff, wobei das Overlay aus mehreren Lagen besteht und wobei mindestens eine Lage (2, 11, 17, 26, 32, 37, 40) des Overlays
- als Flüssigkeit aufgetragen ist,
- abschnittsweise, als regelmäßig oder unregelmäßig verteilte Streifen (6, 7, 12, 18, 27) oder als Gitter aufgetragen ist und
- elektrisch leitende Partikel enthält.

2. Overlay nach Anspruch 1, **dadurch gekennzeichnet, dass** die eine Lage auf der Vorderseite oder auf der Rückseite des Overlays aufgetragen ist.

## Claims

1. An overlay for coating a support plate consisting of wood material, wherein the overlay consists of a plurality of layers, and wherein at least one layer (2, 11, 17, 26, 32, 37, 40) of the overlay
- is applied as a liquid,
- is applied sectionally as regularly or irregularly distributed strips (6, 7, 12, 18, 27) or as a grid, and
- contains electrically conductive particles.

2. The overlay according to claim 1, **characterized in that** said one layer is applied to the front side or to the rear side of the overlay.

## Revendications

1. Film de superposition pour le revêtement d'une plaque de support constituée d'un matériau dérivé du bois, dans lequel le film de superposition comporte plusieurs couches et dans lequel au moins une couche (2, 11, 17, 26, 32, 37, 40) du film de superposition
- est appliquée sous forme de liquide,
- est appliquée par sections, sous la forme de bandes (6, 7, 12, 18, 27) réparties de manière régulière ou irrégulière ou d'une grille, et
- contient des particules électriquement conductrices.

2. Film de superposition selon la revendication 1, **caractérisé en ce que** ladite une couche est appliquée sur le côté avant ou sur le côté arrière du film de superposition.
